# EUROPÄISCHE PATENTSCHRIFT

(11) **EP 4 430 309 B1**
(45) Veröffentlichungstag und Bekanntmachung des Hinweises auf die Patenterteilung: **08.10.2025**
(21) Anmeldenummer: 21815386.4
(22) Anmeldetag: 12.11.2021
(51) Int. Cl.: F04D 23/00, F04D 29/54, F04D 29/58, F04D 29/70, H01M 8/04089, H01M 8/04119, H01M 8/04007

(54) **VORRICHTUNG ZUR ANODENGASREZIRKULATION IN EINEM BRENNSTOFFZELLENSYSTEM**
DEVICE FOR RECIRCULATING ANODE GAS IN A FUEL CELL SYSTEM
DISPOSITIF DE RECIRCULATION DU GAZ ANODIQUE DANS UN SYSTÈME DE PILE À COMBUSTIBLE

(43) Veröffentlichungstag der Anmeldung: 18.09.2024
(73) Patentinhaber: Pierburg GmbH, 41460 Neuss (DE)
(72) Erfinder: ROTHGANG, Stefan, 41460 Neuss (DE); BENRA, Michael-Thomas, 41460 Neuss (DE); BURGER, Andreas, 41460 Neuss (DE)
(74) Vertreter: terpatent PartGmbB
(86) Internationale Anmeldenummer: PCT/EP2021/081494
(87) Internationale Veröffentlichungsnummer: WO 2023/083459

(56) Entgegenhaltungen:
- DE-A1- 102012 221 445
- DE-A1- 102019 003 386
- DE-A1- 102019 215 473

## Beschreibung

Die Erfindung betrifft Vorrichtung zur Anodengasrezirkulation in einem Brennstoffzellensystem mit einem Gebläse mit einem Laufrad und einem Förderkanal, der sich von einem Förderkanaleinlass zu einem Förderkanalauslass erstreckt, und einem Elektromotor mit einer Antriebswelle, auf der das Laufrad befestigt ist.

Brennstoffzellensysteme dienen zur Umwandlung von chemischer Reaktionsenergie eines kontinuierlich zugeführten Brennstoffes, insbesondere Wasserstoff und eines Oxidationsmittels, zumeist Sauerstoff, in elektrische Energie, die beispielsweise als Antriebsenergie für Fahrzeuge verwendet werden kann. Der Wasserstoffpfad einer Niedertemperatur-Brennstoffzelle, wie sie üblicherweise in Fahrzeugen verwendet wird, besteht im Wesentlichen aus der Zuführstrecke des reinen Wasserstoffs über Druckminderungs- und Dosierventil, der eigentlichen Brennstoffzelleneinheit und einem Rezirkulationspfad, der den Austritt der Brennstoffzelleneinheit mit dessen Eintritt, also der Wasserstoff-Zuführstrecke, gasdicht verbindet. Der so entstehende Kreislauf wird als Anodengasrezirkulationskreislauf bezeichnet. Dieser Anodengasrezirkulationskreislauf ist erforderlich, um keinen ungenutzten Wasserstoff in die Atmosphäre zu entlassen, der vorhanden ist, weil die Versorgung der Brennstoffzelleneinheit mit Frischwasserstoff überstöchiometrisch erfolgt. Somit wird der Anodengaskreislauf geschlossen ausgeführt und der unverbrauchte Wasserstoff mittels eines Rezirkulationsgebläses in die Zuführstrecke hinter der Wasserstoffdosierung zurückgeführt. Derartige Gebläse werden beispielsweise als Seitenkanalgebläse ausgebildet. Der Antrieb dieser Gebläse erfolgt üblicherweise über Elektromotoren, die beim Betrieb in Fahrzeugen über die Fahrzeugbatterie mit Spannung versorgt werden. Problematisch an diesen Antrieben ist die hohe Wärmeentwicklung der elektronischen Komponenten und der Wicklungen des Stators.

Neben dem unverbrauchten Wasserstoff besteht das zurückgeführte Anodengas aus den Bestandteilen Stickstoff, der aus der Frischluft der Brennstoffzelleneinheit stammt, sowie Wasserdampf. Außerdem liegt flüssiges Produktwasser am Austritt der Brennstoffzelleneinheit vor, welches ebenfalls über das Rezirkulationsgebläse gefördert wird.

Um das Wasser aus dem Gasgemisch abzuführen, ist es notwendig, das Produktwasser abzuführen und den Wasserdampf möglichst zu kondensieren. Hierzu werden Kondensatoren verwendet.

Um diese Probleme zu lösen, wird in der DE 10 2012 221 445 A1 ein Anodengasrezirkulationsgebläse mit einem Kondensator vorgeschlagen, der an der Rückseite eines Elektromotors des Gebläses ausgebildet ist und dessen Kondensat in einen den Elektromotor umgebenden Kühlkanal abgeführt wird. Ein ähnliches Anodengasrezirkulationsgebläse ist aus DE 10 2019 003 386 A1 bekannt. Es hat sich jedoch gezeigt, dass die Menge des anfallenden Wassers aus dem Anodengasstrom häufig nicht ausreicht, um den Elektromotor zuverlässig zu kühlen.

Aus DE 10 2019 215 473 A1 ist bekannt, eingangsseitig einen Zentrifugen-Abscheider vorzusehen.

Es stellt sich daher die Aufgabe, eine Vorrichtung zur Anodengasrezirkulation in einem Brennstoffzellensystem zur Verfügung zu stellen, mit welcher einerseits eine ausreichende Abfuhr des Wassers aus dem Anodengaskreislauf sichergestellt wird und andererseits eine Überhitzung des Elektromotors zuverlässig vermieden wird. Für diese Funktionen soll ein möglichst minimaler Bauraum benötigt werden.

Diese Aufgabe wird durch eine Vorrichtung zur Anodengasrezirkulation in einem Brennstoffzellensystem mit den Merkmalen des Hauptanspruchs 1 gelöst.

Die erfindungsgemäße Vorrichtung zur Anodengasrezirkulation in einem Brennstoffzellensystem weist ein Gebläse auf, dessen Laufrad drehbar in einem Förderkanal angeordnet ist, so dass das Anodengas durch das Laufrad von einem Förderkanaleinlass zu einem Förderkanalauslass gefördert wird. Der Antrieb des Laufrades erfolgt über einen Elektromotor, der eine Antriebswelle antreibt, auf der das Laufrad befestigt ist. Erfindungsgemäß weist das Gebläse einen vom Anodengas durchströmten Kühlkanal auf, welcher den Elektromotor des Gebläses zumindest teilweise umgibt. Das Anodengas kann dabei entweder durch den Kühlkanal gezogen werden oder gedrückt werden, je nachdem, ob der Kühlkanal fluidisch stromaufwärts oder stromabwärts des Förderkanals des Gebläses angeordnet wird. Der Förderkanal ist des Weiteren durch eine radial äußere Wand begrenzt, durch welche die Umströmung des Elektromotors sichergestellt wird. Der Kühlkanal ist als Tropfenabscheider ausgebildet beziehungsweise dient als solcher, wobei die entstehenden Tropfen über einen Kondensatablaufkanal abführbar sind. Die Ausbildung des Kühlkanals als Tropfenabscheider kann dabei verschiedene Bauformen aufweisen. In jedem Fall müssen im Kühlkanal Einbauten vorhanden sein, die zu einer gezwungenen Umlenkung des Gasstroms führen. Entsprechend wird es genutzt, dass die Temperatur des Anodengasstroms üblicherweise unter 100°C liegt und somit zur Kühlung der Elektronik und des Stators des Elektromotors geeignet ist. Gleichzeitig kann jedoch der Kühlkanal als Kondensator genutzt werden, indem entsprechende Einbauten vorgesehen werden oder das Anodengas mit ausreichender Geschwindigkeit wendelförmig um den Elektromotor geführt wird. Beides führt dazu, dass das Wasser aufgrund der höheren Trägheit im Vergleich zum Gas an den Einbauten oder der äußeren Wand abgeschieden wird und über einen Kondensatablauf abgeführt werden kann. Somit werden im Kühlkanal die Funktion der Kühlung und der Kondensation auf engstem Bauraum und in einem einzigen Verfahrensschritt verwirklicht. Auf die Verwendung separaten Kühlmittels kann ebenfalls vollständig verzichtet werden.

Vorzugsweise ist der Kühlkanal stromaufwärts des Förderkanals angeordnet, so dass das Wasser nicht in den Förderkanal gelangt. So können Schäden an den Schaufeln eines Laufrades verhindert werden und die Abnutzung dessen entsprechend reduziert werden. Zusätzlich kann die Korrosion reduziert werden.

Vorzugsweise ist das Laufrad des Gebläses vollständig oberhalb oder unterhalb des Elektromotors angeordnet und die Welle ist in Richtung der wirkenden Gravitationskraft ausgerichtet. Das Gebläse ist somit senkrecht ausgerichtet. Die Abführung des Kondensats erfolgt so an einem der axialen Enden, so dass die Durchströmung des Kühlkanals unverändert bleibt und insbesondere das Wasser im Anodengasstrom über den gesamten Umfang noch zur Kühlung mitbenutzt werden kann. Bei Anordnung des Laufrades unterhalb des Elektromotors kann auch an gleicher Position ein Kondensat aus dem Bereich des Förderkanals abgelassen werden. Der Kühlkanal kann sowohl von der Rückseite des Gebläses zur Vorderseite also zum Laufrad hin durchströmt werden als auch umgekehrt.

Für die gesamte Offenbarung dieser Schrift wird darauf hingewiesen, dass die Begriffe oberhalb, unterhalb, unter, über, nach unten oder nach oben jeweils auf eine Einbaurichtung bezogen sind, in der das Gebläse beispielsweise in einem Fahrzeug verbaut wird. Dabei wird immer davon ausgegangen, dass ein Erdschwerpunkt als Bezugspunkt zum Gebläse dient. Die Begriffe beziehen sich entsprechend immer auf die Richtung der wirkenden Gravitationskraft, wobei davon ausgegangen wird das beispielwiese das Fahrzeug auf einer geraden Ebene steht, die senkrecht zur Gravitationsrichtung ausgerichtet ist. Ist also ein erstes Element oberhalb eines zweiten Elementes angeordnet, so bedeutet dies, dass dieses erste Element weiter vom Erdschwerpunkt entfernt, angeordnet ist als das zweite Element.

Des Weiteren ist es vorteilhaft, wenn eine den Kühlkanal nach unten begrenzende Wand zu einer Öffnung geneigt ausgebildet ist, die einen Einlass des Kondensatablaufkanals bildet. Auf diese Weise wird das gesamte an den Wänden abtropfende Wasser durch die wirkende Gravitationskraft sicher in die Öffnung und somit zum Kondensatablauf geführt.

In einer bevorzugten Ausführungsform ist der Einlass des Kondensatablaufkanals in der nach unten begrenzenden Wand am radial äußeren Bereich gegenüberliegend zur radial äußeren Wand angeordnet, da sich der Hauptteil des Wassers an dieser äußeren Wand absetzen und dort hinablaufen wird. Dies liegt einerseits daran, dass die Außenwand üblicherweise kälter ist als die innere Wand und andererseits an der Strömungsführung des Anodengases, welches üblicherweise zumindest abschnittsweise um den Elektromotor zirkuliert und somit die schwereren Wassertropfen nach außen gegen die radial begrenzende Wand getrieben werden. So wird sichergestellt, dass das abgeschiedene Wasser möglichst schnell und vollständig aus dem Kühlkanal abgeführt wird.

In einer weiteren Ausführung ist ein Auslass des Kondensatablaufkanals am unteren Ende des Gebläses unterhalb des Förderkanals angeordnet. So kann eine Rückströmung des Kondensats in Richtung des Förderkanals verhindert werden.

Vorzugsweise mündet ein Anodengasauslass des Kühlkanals unmittelbar in einen Förderkanaleinlass. Entsprechend wird der Kühlkanal und anschließend der Förderkanal vom Anodengas beziehungsweise dem Wasser reduzierten Anodengas durchströmt, wobei der Förderweg zwischen dem Förderkanal und dem Kühlkanal minimiert wird.

Zusätzlich ist es vorteilhaft, wenn der Anodengasauslass des Kühlkanals axial versetzt zum Kondensatablaufkanal und oberhalb des Kondensatablaufkanals angeordnet ist. Bei einer solchen Anordnung sammelt sich das Kondensat üblicherweise unterhalb des Anodengasauslasses des Kühlkanals, um zum Kondensatablaufkanal zu gelangen und strömt somit üblicherweise nicht entgegen der Gravitationskraft in den Förderkanal.

In einer weiteren Ausführungsform ist der Anodengasauslass des Kühlkanals oberhalb des Förderkanals und zu einer radial nach außen begrenzenden Wand radial nach innen versetzt angeordnet und weist einen radialen Abstand zur nach radial außen begrenzenden Wand auf. Dies hat zur Folge, dass das Kondensat, welches an der radial äußeren Wand entlangläuft, nicht zum Anodengasauslass des Kühlkanals gelangt, da die Wand aufgrund des radialen Abstandes nicht unmittelbar in den Anodengasauslass mündet.

Wenn das Gebläse in einer Position verbaut ist, in der der Förderkanal oberhalb des Elektromotors angeordnet ist, kann bevorzugt der Anodengasauslass des Kühlkanals unterhalb des Förderkanals angeordnet sein und der Kondensatablaufkanal an der axial entgegengesetzten Seite des Gebläses, also am unteren Ende ausgebildet sein. Dies hat den Vorteil, dass die Förderung des Gases in umgekehrter Richtung zur auf die Flüssigkeit wirkenden Gravitationskraft erfolgt, wodurch ein Mitreißen der abgesetzten Wassertropfen beinahe vollständig unterbunden wird.

In einer weiteren Ausführungsform öffnet sich der Kühlkanal unterhalb des Förderkanals in einen Raum, in den ein Rohr von oben ragt, welches den Anodengasauslass des Kühlkanals bildet, wobei der Kondensatablauf am unteren Ende des Raums ausgebildet ist. Durch die Expansion des für das Anodengas zur Verfügung stehenden Raumes wird zusätzlich Wasser ausgeschieden, welches sich aufgrund der Gravitation im unteren Raum sammelt und abfließen kann, während das Gas, wie in einem Zyklonabscheider nach oben durch das Rohr abgeführt wird. So kann auf einfache Weise ein guter Abscheidegrad direkt am Gebläse erreicht werden.

In einer hierzu weiterführenden Ausführung ist der Anodengasauslass mit dem Förderkanaleinlass fluidisch verbunden und der Förderkanal ist oberhalb des Raums ausgebildet, so dass das vom Wasser befreite Anodengas unmittelbar aus dem Raum in den Förderkanal strömen kann. So kann auf kleinstem Bauraum Kühlung, Kondensation und Förderung sichergestellt werden.

In einer besonders bevorzugten Ausbildung der Erfindung umgibt der Kühlkanal den Elektromotor wendelförmig. Entsprechend erfolgt eine Abscheidung in Form eines Zentrifugalabscheiders. Hierzu darf lediglich der Kühlkanal nicht mit einem zu großen Querschnitt ausgebildet werden, sondern eine ausreichende Strömungsgeschwindigkeit im Kühlkanal sichergestellt werden. Ist dies der Fall, werden die schwereren Wassertropfen gegen die Außenwand beschleunigt und strömen entlang der Wand hinab zum Kondensatablaufkanal.

In einer hierzu weiterführenden Ausführungsform ist die radial äußere Wand des wendelförmigen Kühlkanals glatt ausgebildet. So wird einerseits der Strömungswiderstand für den Anodengasstrom geringgehalten und andererseits ein störungsfreies Ablaufen des Kondensats entlang dieser Wand sichergestellt.

In einer weiteren vorteilhaften Ausgestaltung ist der Kühlkanal wendelförmig von oben nach unten durchströmt und der Förderkanal oberhalb des Elektromotors angeordnet und über einen Verbindungskanal mit dem Förderkanaleinlass verbunden, an dessen stromaufwärtigen Ende der Kondensatablaufkanal ausgebildet ist. So sammelt sich das Wasser im Endbereich des Kühlkanals am unteren Ende. Während im Folgenden der Anodengasstrom nach oben zum Förderkanal gefördert wird, kann das Kondensat unten abgeführt werden, wobei ein Mitreißen erneut verhindert wird. Auch bei dieser Ausführung wird eine Wirkung wie in einem Zyklonabscheider erzielt, wobei der Verbindungskanal die Funktion des Tauchrohres einnimmt. Auch auf diese Weise wird eine sehr gute Abscheidung und Kühlwirkung erzielt.

In einer alternativen Ausführungsform sind im Kühlkanal Prallwände angeordnet, die in einem Winkel von 45° bis 135° zur Hauptströmungsrichtung ausgerichtet sind. Das feuchte Gas wird durch die Prallwände geführt, durch die die Strömungsrichtung des Gases mehrfach umgelenkt wird. Die Flüssigkeitstropfen können diesen Richtungsänderungen nicht folgen, weshalb diese auf die Einbauten prallen und sich dort absetzen. Bei zunehmender Ablagerung der Tropfen fließen diese nach unten. Im unteren Bereich können die Tropfen gesammelt anschließend über den Kondensatablaufkanal abgeführt werden. So wird auf einfache Weise der Kühlkanal als Tropfenabscheider genutzt. Die Prallwände können als massive Wände aber auch als Gitterwände ausgebildet werden. Sie können im Kühlkanal sowohl an der inneren als auch an der äußeren Wand ausgebildet werden und den Strömungsweg sowohl über eine axiale als auch über eine radiale Querschnittsfläche ganz oder teilweise verschließen.

In einer weiterführenden Ausführungsform ist stromaufwärts des Anodengasauslasses des Kühlkanals eine Prallwand ausgebildet, die in Umfangsrichtung betrachtet den Anodengasauslass verdeckt. Auf diese Weise wird sichergestellt, dass der Anodengasstrom vor dem Auslass noch auf eine Umlenkung trifft und noch vorhandene Tropfen abgeschieden werden.

Es wird somit eine Vorrichtung zur Anodengasrezirkulation in einem Brennstoffzellensystem geschaffen, welche wenig Bauraum benötigt und gleichzeitig eine Kühlung des Antriebsmotors und eine Wasserabscheidung aus dem Anodengasstrom realisiert.

Zwei erfindungsgemäße Ausführungsbeispiele sind in den Figuren dargestellt und werden nachfolgend beschrieben.
Figur 1 zeigt eine perspektivische Ansicht eines ersten Ausführungsbeispiels eines Gebläses einer erfindungsgemäßen Vorrichtung zur Anodengasrezirkulation in einem Brennstoffzellensystem.
Figur 2 zeigt eine perspektivische Ansicht des Gebläses aus Figur 1 mit weggeschnittenem Außengehäuseteil.
Figur 3 zeigt eine Kopfansicht des Gebläses aus Figur 1 in geschnittener Darstellung.
Figur 4 zeigt eine Seitenansicht einer zweiten erfindungsgemäßen Vorrichtung zur Anodengasrezirkulation in einem Brennstoffzellensystem in schematischer Darstellungsweise.
Figur 5 zeigt eine Seitenansicht einer dritten erfindungsgemäßen Vorrichtung zur Anodengasrezirkulation in einem Brennstoffzellensystem in schematischer Darstellungsweise.

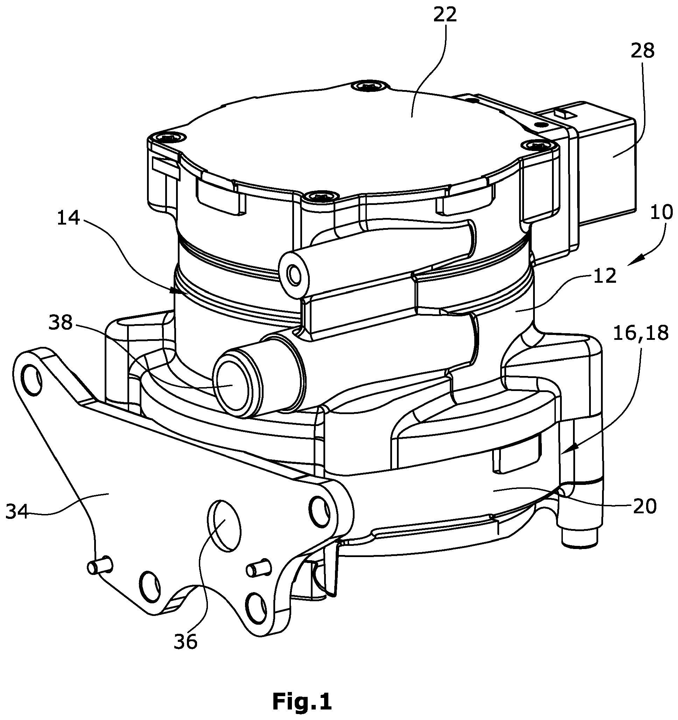

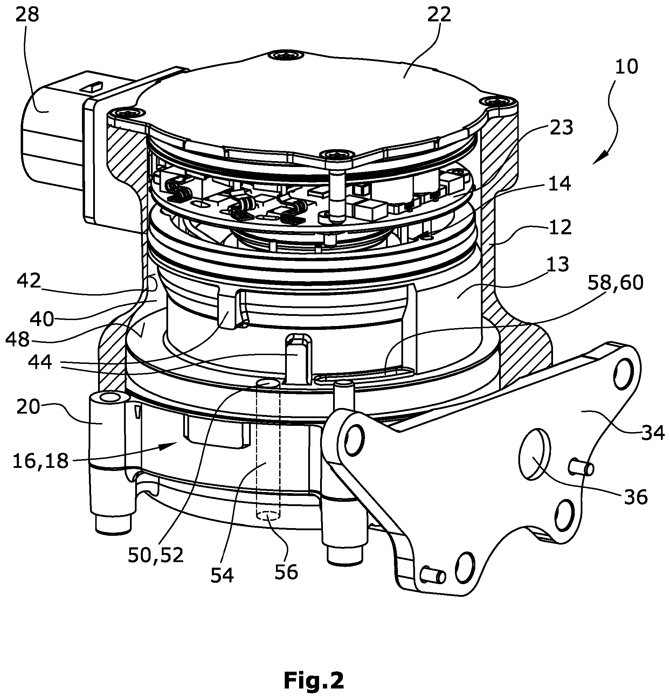

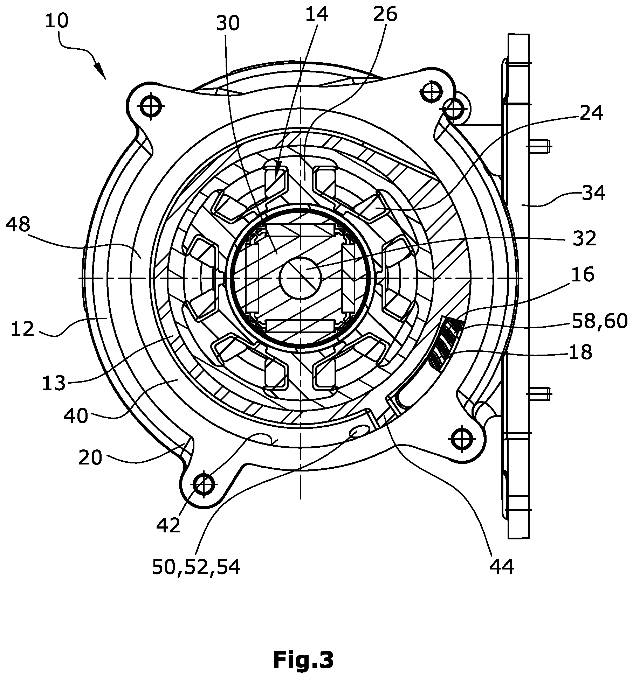

Das in den Figuren 1 bis 3 dargestellte Gebläse 10 weist ein äußeres Motorgehäuseteil 12 auf, welches ein inneres Motorgehäuseteil 13 radial umgibt, in dem ein Elektromotor 14 angeordnet ist, der ein Laufrad 16 antreibt, über welches ein Anodengas über einen Förderkanal 18 gefördert wird, der zumindest teilweise in einem Gebläsekopfgehäuse 20 ausgebildet ist. Das äußere Motorgehäuseteil 12 wird am Gebläsekopfgehäuse 20 befestigt und an der zum Gebläsekopfgehäuse 20 entgegengesetzten axialen Seite durch einen Deckel 22 verschlossen, hinter dem die Elektronik 23 des Elektromotors 14 angeordnet ist, welche ebenso wie Wicklungen 24 eines Stators 26 über einen Stecker 28 an eine Spannungsquelle angeschlossen ist. Der Stator 26 korrespondiert in bekannter Weise mit einem permanentmagnetischen Rotor 30, der fest auf einer Antriebswelle 32 befestigt ist, auf der wiederum das Laufrad 16 befestigt ist.

Am Gebläsekopfgehäuse 20 ist im vorliegenden Ausführungsbeispiel ein Flansch 34 ausgebildet, an dem ein Förderkanalauslass 36 ausgebildet ist, der mit dem Förderkanal 18 fluidisch verbunden ist. Am äußeren Gehäuseteil 12 ist des Weiteren ein Anodengaseinlass 38 ausgebildet, der in einen zwischen dem inneren Motorgehäuseteil 13 und dem äußeren Motorgehäuseteil 12 ausgebildeten und den Elektromotor 14 zumindest teilweise umgebenden Kühlkanal 40 führt. Der Kühlkanal 40 dient zur Abführung von Wärme aus dem Elektromotor 14 und wird radial nach außen durch eine radial äußere Wand 42 begrenzt, die durch eine Innenwand des äußeren Motorgehäuseteils 12 gebildet wird.

Im Kühlkanal 40 sind Prallwände 44 ausgebildet, die sich axial von oben und unten in den Kühlkanal 40 erstrecken, so dass stetig eine Strömungsumkehr im Kühlkanal 40 erzwungen wird. Die Prallwände 44 dienen als Einbauten eines Tropfenabscheiders 46, da im Anodengasstrom als Tropfen oder Wasserdampf vorliegendes Wasser aufgrund seiner höheren Trägheit im Vergleich zum im Anodengasstrom vorhandenen Stickstoff und Wasserstoff gegen die Prallwände 44 prallt, sich sammelt und insbesondere an der radial äußeren Wand 42, welche kälter ist und in deren Richtung die Tropfen durch die Fliehkraft getragen werden, aufgrund der Gravitationskraft hinabgleitet. Eine den Kühlkanal 40 nach axial unten begrenzende Wand 48 ist zu einer Öffnung 50 schräg ausgebildet, so dass die sich auf dieser Wand 48 sammelnden Tropfen zu dieser Öffnung 50 gleiten, welche als Einlass 52 eines Kondensatablaufkanals 54 dient, der sich vom inneren Motorgehäuseteil 13 durch das Gebläsekopfgehäuse 20 bis zu einem Auslass 56 erstreckt. Die Wand 48 ist sowohl bezüglich der Horizontalen als auch nach radial außen schräg abfallend in Richtung zur Öffnung 50 ausgebildet, welche an die umgebende radial äußere Wand 42 grenzt, so dass das Wasser aufgrund der Schwerkraft zur Öffnung 50 strömt.

Ein Anodengasauslass 58, durch welchen das Wasser reduzierte Anodengas aus dem Kühlkanal 40 strömt, ist axial geringfügig höher angeordnet als der Einlass 52 des Kondensatablaufkanals 54, um zu verhindern, dass Wasser zum Anodengasauslass 58 strömt. Zusätzlich ist der Anodengasauslass 58 unmittelbar im Strömungsschatten einer letzten Prallwand 44 angeordnet, durch die unmittelbar vor dem Anodengasauslass 58 noch einmal Wasser abgetrennt wird. Des Weiteren ist der Anodengasauslass 58 in einem radial inneren Bereich des Kühlkanals 40 angeordnet, weist also einen radialen Abstand zur radial äußeren Wand 42 auf, so dass das trägere Wasser auch nach innen und damit entgegen der Zentrifugalkraft und der durch die Prallwand 44 vorgenommen Beschleunigung nach außen, transportiert werden müsste, um zum Anodengasauslass 58 des Kühlkanals 40 zu gelangen.

Der Anodengasauslass mündet unmittelbar in, beziehungsweise bildet einen Förderkanaleinlass 60, über den das zumindest teilweise getrocknete Anodengas in den Förderkanal 18 einströmt, wo es verdichtet wird und zum Förderkanalauslass 36 strömt, der mit einem Brennstoffzellenstapel fluidisch verbunden ist, während das gewonnene Kondensat über den Kondensatablaufkanal 54 zum Auslass 56 strömt. So wird gleichzeitig eine Kühlung des Elektromotors 14 und eine Abscheidung des Prozesswassers aus dem Anodengasstrom erreicht.

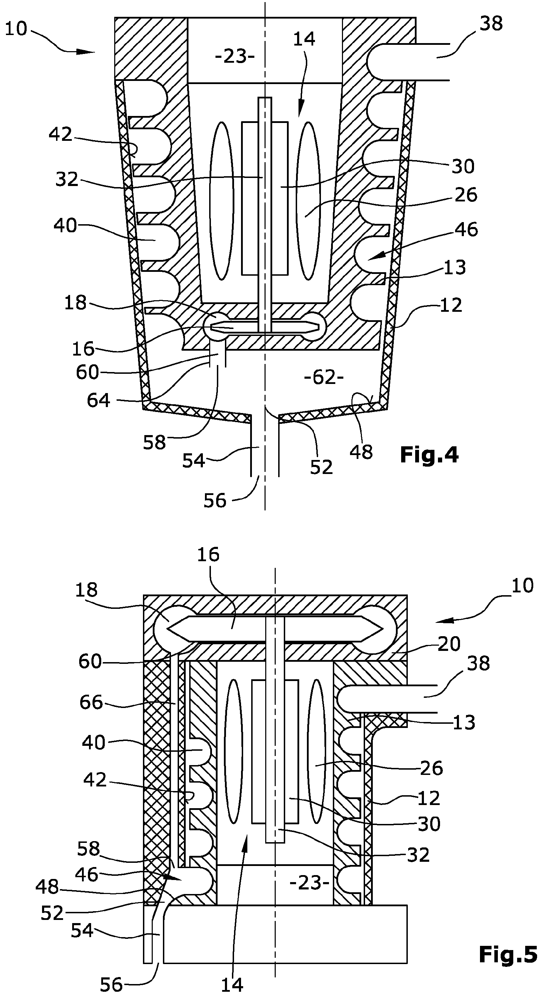

Eine alternative Ausführung einer solchen kombinierten Kühlung und Wasserabscheidung ist schematisch in der Figur 4 dargestellt, wobei im Folgenden für gleiche Bauteile gleiche Bezugszeichen verwendet werden.

Der hier verwendete Tropfenabscheider 46 wirkt als Zyklonabscheider, indem der Kühlkanal 40 wendelförmig ausgebildet wird, in dem eine ausreichend hohe Strömungsgeschwindigkeit erzielt wird, um aufgrund der vorhandenen Zentrifugalkraft die schwereren Wassertropfen und den Wasserdampf vom übrigen Anodengasstrom zu trennen, indem er aufgrund seiner höheren Trägheit nach außen gegen die radial äußere Wand 42 beschleunigt wird. Diese Wand 42 ist glatt ausgeführt, so dass die an dieser zusätzlich auch kälteren Wand 42 auftreffenden Wassertropfen erneut aufgrund der wirkenden Gravitationskraft hinabgleiten. Im unteren Bereich gelangt das auf diese Weise getrennte Wasser und der Anodengasstrom in einen Raum 62, in dem aufgrund der Querschnittserweiterung auch eine Expansion erfolgt, die zu einem zusätzlichen Temperaturverlust und damit zu zusätzlich entstehenden Wassertropfen führen kann. In jedem Fall gelangt das bereits abgeschiedene Wasser über die axial begrenzende trichterförmige und somit schräge Wand 48 zum Kondensatablaufkanal 54, während das Anodengas über ein in den Raum 62 eintauchendes Rohr 64, welches als Anodengasauslass 58 des Kühlkanals 40 dient, zum Förderkanal 18 gelangt, wo es erneut verdichtet und in Richtung zur Brennstoffzelle gepumpt wird.

In der Figur 5 ist ein alternatives Ausführungsbeispiel dargestellt, bei dem der Förderkanal 18 im Gegensatz zu den vorherigen Ausbildungen diesmal oberhalb des Elektromotors 14 angeordnet wird, so dass die Gravitationskraft in diesem Fall eine Flüssigkeit vom Förderkanal 18 entfernt. Der Anodengaseinlass 38 in den Kühlkanal 40 erfolgt im oberen Bereich des Gebläses 10. Von hier gelangt das Anodengas in einen wendelförmigen Kühlkanal 40 entsprechend der vorbeschriebenen Ausführungsform, so dass sich erneut das Wasser an der radial äußeren Wand absetzt. Von dort gelangt es im vorliegenden Ausführungsbeispiel unmittelbar in den sich anschließenden Kondensatablaufkanal 54. Das getrocknete Anodengas kann jedoch dem Druckgefälle folgend über einen Verbindungskanal 66, der den Anodengasauslass 58 des Kühlkanals 40 bildet, in Richtung zum Förderkanal 18 gefördert werden. So erfolgt die Trennung des Wassers und des Wasserdampfes aus dem Anodengasstrom durch die Zentrifugalkräfte und die Abführung durch die Gravitationskraft.

In allen drei Fällen wird das Anodengas des Rezirkulationspfades unmittelbar zur Kühlung des das Gebläse antreibenden Elektromotors verwendet und gleichzeitig wird diesem Gas kontinuierlich Wasser entzogen. Auf diese Weise wird der benötigte Bauraum verringert und zwei Funktionen des Systems in einem Bauteil integriert, so dass Kosten reduziert werden. Selbstverständlich sollte hinter dem Kondensatablaufkanal jeweils ein Ventil angeordnet werden, mit dem das anfallende Kondensat abgelassen werden kann und durch welches verhindert wird, dass Anodengas in den Kondensatablaufkanal strömt.

Es sollte deutlich sein, dass die beschriebene Vorrichtung zur Anodengasrezirkulation in einem Brennstoffzellensystem nicht auf die beschriebenen Ausführungsbeispiele begrenzt ist. Des Weiteren kann, wenn das Gebläse ein Seitenkanalgebläse ist, an dessen tiefster Stelle im Förderkanal und in Drehrichtung des Laufrades betrachtet unmittelbar vor einem Unterbrecherabschnitt des Förderkanals ein zweiter Kondensatablauf ausgebildet sein, über den Restfeuchte, die in den Förderkanal gelangt, ebenfalls noch abgeschieden werden kann. Es können auch verschiedene Tropfenabscheider verwendet werden oder die verschiedenen gezeigten Abführungen der getrennten Stoffe mit den verschiedenen Möglichkeiten zur Abscheidung unterschiedlich kombiniert werden.

## Patentansprüche

1. Vorrichtung zur Anodengasrezirkulation in einem Brennstoffzellensystem mit
einem Gebläse (10) mit einem Laufrad (16) und einem Förderkanal (18), der sich von einem Förderkanaleinlass (60) zu einem Förderkanalauslass (36) erstreckt,
und einem Elektromotor (14) mit einer Antriebswelle (32), auf der das Laufrad (16) befestigt ist,
wobei das Gebläse (10) einen vom Anodengas durchströmten Kühlkanal (40) aufweist, welcher
den Elektromotor (14) des Gebläses (10) zumindest teilweise umgibt, durch eine radial äußere Wand (42) begrenzt ist,
**dadurch gekennzeichnet, dass**
der Kühlkanal durch Einbauten, die zu einer gezwungenen Umlenkung des Gasstroms führen, als Tropfenabscheider (46) ausgebildet ist, wobei die Tropfen über einen Kondensatablaufkanal (54) abführbar sind.

2. Vorrichtung zur Anodengasrezirkulation in einem Brennstoffzellensystem nach Anspruch 1,
**dadurch gekennzeichnet, dass**
der Kühlkanal (40) stromaufwärts des Förderkanals (18) angeordnet ist.

3. Vorrichtung zur Anodengasrezirkulation in einem Brennstoffzellensystem nach Anspruch 1 oder 2,
**dadurch gekennzeichnet, dass**
das Laufrad (16) des Gebläses (10) vollständig oberhalb oder unterhalb des Elektromotors (14) angeordnet ist und die Antriebswelle (32) im eingebauten Zustand in Richtung der wirkenden Gravitationskraft ausgerichtet ist.

4. Vorrichtung zur Anodengasrezirkulation in einem Brennstoffzellensystem nach einem der vorhergehenden Ansprüche,
**dadurch gekennzeichnet, dass**
eine den Kühlkanal (40) nach unten begrenzende Wand (48) zu einer Öffnung (50) geneigt ausgebildet ist, die einen Einlass (52) des Kondensatablaufkanals (54) bildet.

5. Vorrichtung zur Anodengasrezirkulation in einem Brennstoffzellensystem nach Anspruch 4,
**dadurch gekennzeichnet, dass**
der Einlass (52) des Kondensatablaufkanals (54) in der nach unten begrenzenden Wand (48) am radial äußeren Bereich gegenüberliegend zur radial äußeren Wand (42) angeordnet ist.

6. Vorrichtung zur Anodengasrezirkulation in einem Brennstoffzellensystem nach einem der vorhergehenden Ansprüche,
**dadurch gekennzeichnet, dass**
ein Auslass (56) des Kondensatablaufkanals (54) am unteren Ende des Gebläses (10) unterhalb des Förderkanals (18) angeordnet ist.

7. Vorrichtung zur Anodengasrezirkulation in einem Brennstoffzellensystem nach einem der vorhergehenden Ansprüche,
**dadurch gekennzeichnet, dass**
ein Anodengasauslass (58) des Kühlkanals (40) unmittelbar in den Förderkanaleinlass (60) mündet.

8. Vorrichtung zur Anodengasrezirkulation in einem Brennstoffzellensystem nach Anspruch 7,
**dadurch gekennzeichnet, dass**
der Anodengasauslass (58) des Kühlkanals (40) axial versetzt zum Einlass (52) des Kondensatablaufkanals (54) und oberhalb des Einlasses (52) des Kondensatablaufkanals (54) angeordnet ist.

9. Vorrichtung zur Anodengasrezirkulation in einem Brennstoffzellensystem nach Anspruch 7 oder 8,
**dadurch gekennzeichnet, dass**
der Anodengasauslass (58) des Kühlkanals (40) oberhalb des Förderkanals (18) und zur radial äußeren Wand (42) radial nach innen versetzt angeordnet ist und einen radialen Abstand zur radial äußeren Wand (42) aufweist.

10. Vorrichtung zur Anodengasrezirkulation in einem Brennstoffzellensystem nach Anspruch 7,
**dadurch gekennzeichnet, dass**
der Anodengasauslass (58) des Kühlkanals (40) unterhalb des Förderkanals (18) angeordnet ist und der Kondensatablaufkanal (54) an der axial entgegengesetzten Seite des Gebläses (10) ausgebildet ist.

11. Vorrichtung zur Anodengasrezirkulation in einem Brennstoffzellensystem nach einem der Ansprüche 1 bis 6,
**dadurch gekennzeichnet, dass**
der Kühlkanal (40) sich unterhalb des Förderkanals (18) in einen Raum (62) öffnet, in den ein Rohr (64) von oben ragt, welches den Anodengasauslass (58) des Kühlkanals (40) bildet, wobei der Einlass (52) des Kondensatablaufkanals (54) am unteren Ende des Raums (62) ausgebildet ist.

12. Vorrichtung zur Anodengasrezirkulation in einem Brennstoffzellensystem nach Anspruch 11,
**dadurch gekennzeichnet, dass**
der Anodengasauslass (58) mit dem Förderkanaleinlass (60) fluidisch verbunden ist und der Förderkanal (18) oberhalb des Raums (62) ausgebildet ist.

13. Vorrichtung zur Anodengasrezirkulation in einem Brennstoffzellensystem nach einem der vorhergehenden Ansprüche,
**dadurch gekennzeichnet, dass**
der Kühlkanal (40) den Elektromotor (14) wendelförmig umgibt.

14. Vorrichtung zur Anodengasrezirkulation in einem Brennstoffzellensystem nach Anspruch 13,
**dadurch gekennzeichnet, dass**
die radial äußere Wand (42) des wendelförmigen Kühlkanals (40) glatt ausgebildet ist.

15. Vorrichtung zur Anodengasrezirkulation in einem Brennstoffzellensystem nach Anspruch 13 oder 14,
**dadurch gekennzeichnet, dass**
der Kühlkanal (40) wendelförmig von oben nach unten durchströmt ist und der Förderkanal (18) oberhalb des Elektromotors (14) angeordnet ist und über einen Verbindungskanal (66) mit dem Förderkanaleinlass (60) verbunden ist, an dessen stromaufwärtigen Ende der Kondensatablaufkanal (54) ausgebildet ist.

## Claims

1. Device for anode gas recirculation in a fuel cell system, comprising
a fan (10) with a wheel (16) and a delivery duct (18) which extends from a delivery duct inlet (60) to a delivery duct outlet (36),
and an electric motor (14) with a drive shaft (32) on which the impeller (16) is fastened,
wherein the fan (10) has a cooling duct (40) through which the anode gas flows and which
at least partially surrounds the electric motor (14) of the fan (10), is delimited by a radially outer wall (42),
**characterized in that**
the cooling duct is formed as a droplet separator (46) by internals which lead to a forced deflection of the gas flow, wherein the droplets can be discharged via a condensate discharge duct (54).

2. Device for anode gas recirculation in a fuel cell system according to claim 1,
**characterized in that**
the cooling duct (40) is arranged upstream of the delivery duct (18).

3. Device for anode gas recirculation in a fuel cell system according to claim 1 or 2,
**characterized in that**
the wheel (16) of the fan (10) is arranged completely above or below the electric motor (14) and the drive shaft (32) is oriented in the installed state in the direction of the acting gravitational force.

4. Device for anode gas recirculation in a fuel cell system according to one of the preceding claims,
**characterized in that**
a wall (48) which delimits the cooling duct (40) at the bottom is formed so as to be inclined with respect to an opening (50) which defines an inlet (52) of the condensate discharge duct (54).

5. Device for anode gas recirculation in a fuel cell system according to claim 4,
**characterized in that**
the inlet (52) of the condensate discharge duct (54) is arranged in the downwardly delimiting wall (48) at the radially outer region opposite the radially outer wall (42).

6. Device for anode gas recirculation in a fuel cell system according to one of the preceding claims,
**characterized in that**
an outlet (56) of the condensate discharge duct (54) is arranged at the lower end of the fan (10) below the delivery duct (18).

7. Device for anode gas recirculation in a fuel cell system according to one of the preceding claims,
**characterized in that**
an anode gas outlet (58) of the cooling duct (40) opens directly into the delivery duct inlet (60).

8. Device for anode gas recirculation in a fuel cell system according to claim 7,
**characterized in that**
the anode gas outlet (58) of the cooling duct (40) is arranged axially offset with respect to the inlet (52) of the condensate discharge duct (54) and above the inlet (52) of the condensate discharge duct (54).

9. Device for anode gas recirculation in a fuel cell system according to claim 7 or 8,
**characterized in that**
the anode gas outlet (58) of the cooling duct (40) is arranged above the delivery duct (18) and radially inwardly offset with respect to the radially outer wall (42) and is at a radial distance from the radially outer wall (42).

10. Device for anode gas recirculation in a fuel cell system according to claim 7,
**characterized in that**
the anode gas outlet (58) of the cooling duct (40) is arranged below the delivery duct (18) and the condensate discharge duct (54) is formed on the axially opposite side of the fan (10).

11. Device for anode gas recirculation in a fuel cell system according to one of claims 1 to 6,
**characterized in that**
the cooling duct (40) opens below the delivery duct (18) into a space (62) into which a pipe (64) which defines the anode gas outlet (58) of the cooling duct (40) projects from above, wherein the inlet (52) of the condensate discharge duct (54) is provided at the lower end of the space (62).

12. Device for anode gas recirculation in a fuel cell system according to claim 11,
**characterized in that**
the anode gas outlet (58) is fluidically connected to the delivery duct inlet (60) and the delivery duct (18) is provided above the space (62).

13. Device for anode gas recirculation in a fuel cell system according to one of the preceding claims,
**characterized in that**
the cooling duct (40) surrounds the electric motor (14) in a helical manner.

14. Device for anode gas recirculation in a fuel cell system according to claim 13,
**characterized in that**
the radially outer wall (42) of the helical cooling duct (40) is provided to be smooth.

15. Device for anode gas recirculation in a fuel cell system according to claim 13 or 14,
**characterized in that**
the cooling duct (40) is flowed through in a helical manner from top to bottom and the delivery duct (18) is arranged above the electric motor (14) and is connected via a connecting duct (66) to the delivery duct inlet (60), at the upstream end of which the condensate discharge duct (54) is provided.

## Revendications

1. Dispositif de recirculation de gaz d'anode dans un système de pile à combustible, comprenant
une soufflante (10) avec une roue mobile (16) et un canal de transport (18) qui s'étend d'une entrée de canal de transport (60) à une sortie de canal de transport (36),
et un moteur électrique (14) avec un arbre d'entraînement (32) sur lequel est fixée la roue mobile (16),
la soufflante (10) présentant un canal de refroidissement (40) traversé par le gaz d'anode, qui
entoure au moins partiellement le moteur électrique (14) de la soufflante (10), est limité par une paroi radialement extérieure (42),
**caractérisé en ce que**
le canal de refroidissement est réalisé sous forme de séparateur de gouttes (46) par des éléments intégrés qui conduisent à une déviation forcée du flux de gaz, les gouttes pouvant être évacuées par le biais d'un canal d'évacuation de condensat (54).

2. Dispositif de recirculation de gaz d'anode dans un système de pile à combustible selon la revendication 1,
**caractérisé en ce que**
le canal de refroidissement (40) est disposé en amont du canal de transport (18).

3. Dispositif de recirculation de gaz d'anode dans un système de pile à combustible selon la revendication 1 ou 2,
**caractérisé en ce que**
la roue mobile (16) de la soufflante (10) est disposée complètement au-dessus ou en dessous du moteur électrique (14) et l'arbre d'entraînement (32) est orienté dans l'état monté dans la direction de la force de gravitation agissant.

4. Dispositif de recirculation de gaz d'anode dans un système de pile à combustible selon l'une quelconque des revendications précédentes,
**caractérisé en ce que**
une paroi (48) limitant le canal de refroidissement (40) vers le bas est réalisée de manière inclinée vers une ouverture (50) qui forme une entrée (52) du canal d'évacuation de condensat (54).

5. Dispositif de recirculation de gaz d'anode dans un système de pile à combustible selon la revendication 4,
**caractérisé en ce que**
l'entrée (52) du canal d'évacuation de condensat (54) est disposée dans la paroi (48) limitant vers le bas au niveau de la région radialement extérieure à l'opposé de la paroi radialement extérieure (42).

6. Dispositif de recirculation de gaz d'anode dans un système de pile à combustible selon l'une quelconque des revendications précédentes,
**caractérisé en ce que**
une sortie (56) du canal d'évacuation de condensat (54) est disposée au niveau de l'extrémité inférieure de la soufflante (10) en dessous du canal de transport (18).

7. Dispositif de recirculation de gaz d'anode dans un système de pile à combustible selon l'une quelconque des revendications précédentes,
**caractérisé en ce que**
une sortie de gaz d'anode (58) du canal de refroidissement (40) débouche directement dans l'entrée de canal de transport (60).

8. Dispositif de recirculation de gaz d'anode dans un système de pile à combustible selon la revendication 7,
**caractérisé en ce que**
la sortie de gaz d'anode (58) du canal de refroidissement (40) est disposée de manière décalée axialement par rapport à l'entrée (52) du canal d'évacuation de condensat (54) et au-dessus de l'entrée (52) du canal d'évacuation de condensat (54).

9. Dispositif de recirculation de gaz d'anode dans un système de pile à combustible selon la revendication 7 ou 8,
**caractérisé en ce que**
la sortie de gaz d'anode (58) du canal de refroidissement (40) est disposée de manière décalée radialement vers l'intérieur au-dessus du canal de transport (18) et par rapport à la paroi radialement extérieure (42) et présente une distance radiale par rapport à la paroi radialement extérieure (42).

10. Dispositif de recirculation de gaz d'anode dans un système de pile à combustible selon la revendication 7,
**caractérisé en ce que**
la sortie de gaz d'anode (58) du canal de refroidissement (40) est disposée en dessous du canal de transport (18) et le canal d'évacuation de condensat (54) est réalisé au niveau du côté axialement opposé de la soufflante (10).

11. Dispositif de recirculation de gaz d'anode dans un système de pile à combustible selon l'une quelconque des revendications 1 à 6,
**caractérisé en ce que**
le canal de refroidissement (40) s'ouvre en dessous du canal de transport (18) dans un espace (62) dans lequel fait saillie par le haut un tube (64) qui forme la sortie de gaz d'anode (58) du canal de refroidissement (40), l'entrée (52) du canal d'évacuation de condensat (54) étant réalisée au niveau de l'extrémité inférieure de l'espace (62).

12. Dispositif de recirculation de gaz d'anode dans un système de pile à combustible selon la revendication 11,
**caractérisé en ce que**
la sortie de gaz d'anode (58) est connectée fluidiquement à l'entrée de canal de transport (60) et le canal de transport (18) est réalisé au-dessus de l'espace (62).

13. Dispositif de recirculation de gaz d'anode dans un système de pile à combustible selon l'une quelconque des revendications précédentes,
**caractérisé en ce que**
le canal de refroidissement (40) entoure le moteur électrique (14) en forme d'hélice.

14. Dispositif de recirculation de gaz d'anode dans un système de pile à combustible selon la revendication 13,
**caractérisé en ce que**
la paroi radialement extérieure (42) du canal de refroidissement (40) en forme d'hélice est réalisée de manière lisse.

15. Dispositif de recirculation de gaz d'anode dans un système de pile à combustible selon la revendication 13 ou 14,
**caractérisé en ce que**
le canal de refroidissement (40) est traversé en forme d'hélice du haut vers le bas et le canal de transport (18) est disposé au-dessus du moteur électrique (14) et est connecté par le biais d'un canal de connexion (66) à l'entrée de canal de transport (60), au niveau de l'extrémité amont de laquelle le canal d'évacuation de condensat (54) est réalisé.
